# EUROPÄISCHE PATENTANMELDUNG

(11) **EP 1 584 433 A1**
(43) Veröffentlichungstag der Anmeldung: **12.10.2005**
(21) Anmeldenummer: 05007085.3
(22) Anmeldetag: 31.03.2005
(51) Int. Cl.: B27B 5/06, B23D 45/20

(54) **Vorrichtung zum Trennen und Aufteilen eines plattenförmigen Produktes**

(30) Priorität: 31.03.2004 DE 102004015891
(71) Anmelder: Dieffenbacher Maschinenfabrik GmbH, 75059 Zaisenhausen (DE)
(72) Erfinder: Salenz, Dieter, 75059 Zaisenhausen (DE)
(74) Vertreter: Hartdegen, Anton

(57) **Zusammenfassung**

Die Erfindung betrifft eine Vorrichtung zum Trennen und Aufteilen eines plattenförmigen Produktes, das als eine endliche oder als eine unendliche Platte, Band oder Strang aus einer Produktionsanlage kontinuierlich oder diskontinuierlich austritt und wobei zwei Diagonalsägen in Vorschubrichtung und quer über das Produkt verfahrbar angeordnet sind. Die Erfindung besteht darin, dass in einem Gestell (12) drei Sägeschlitten (8) mit je einer Diagonalsäge (1, 2, 3) eng hintereinander untergebracht und die drei Sägeschlitten (8) mit den drei Diagonalsägen (1, 2, 3) im spitzen Winkel zur Vorschubrichtung der zu sägenden Platte (7) verfahrbar sind.

## Beschreibung

Die vorliegende Erfindung betrifft eine Vorrichtung zum Trennen und Aufteilen eines plattenförmigen Produktes nach dem Oberbegriff des Anspruches 1.

Derartige Vorrichtungen sind bereits aus dem Stand der Technik bekannt und arbeiten im Allgemeinen mit zwei Diagonalsägen, wobei die Sägen den Sägeschnitt ausführen, während das Sägeblatt kontinuierlich vortransportiert wird.

Mit derartigen Diagonalsägen werden insbesondere Produkte gesägt, die als endlose Platte, Band oder Strang aus einer Produktionsanlage kommen.
Zu solchen Produkten zählen z.B. Spanplatten, MDF-Platten, OSB-Platten, Kunststoffplatten, Hochdruck-Schichtstoffplatten und Gipskarton oder Gipsfaserplatten und dergleichen. Da der Schnitt selbst rechtwinklig zur Vorschubrichtung erfolgt, muss auch das Sägegut rechtwinklig zur Vorschubrichtung stehen.

Da derartige Sägevorrichtungen digital gesteuert werden, ist ein millimetergenauer Gleichlauf zwischen Vorschubbewegung der Säge und Vorschubbewegung des Produktes gewährleistet. Derartige Vorrichtungen werden mit Einzelsägen für lange Platten, bzw. langsamen Vorschubgeschwindigkeiten oder Doppeldiagonalsägen zur Verkürzung der Taktzeit durch taktweise wechselndes Arbeiten der beiden Sägen ausgeführt.

Bei den bekannten Vorrichtungen zum Sägen von plattenförmigen Produkten gemäß eingangs genannter Art besteht der Nachteil, dass zum Sägeblattwechsel bei der Einzelsäge immer und bei der Doppeldiagonalsäge im Wechseltaktbetrieb die Produktion unterbrochen werden muss.

In modernen Produktionsanlagen müssen Sägeaggregate in eine gesicherte Werkzeugposition gefahren werden können, in der ein Sägeblattwechsel gefahrlos durchgeführt werden kann, ohne die Produktion zu unterbrechen. Dies ist zur Zeit nur mit Doppeldiagonalsägen im Einsägenbetrieb möglich.
Da im Sägenbereich der Diagonalsägen kein Vorschub des plattenförmigen Produktes erfolgen kann, muss der Raum zwischen den Sägen, um auch kurze Platten sägen zu können, möglichst kurz gestaltet werden. Dazu werden bei herkömmlichen Vorrichtungen mit Doppeldiagonalsägen die zwei Sägen spiegelbildlich zueinander angeordnet.

Außerdem erfordern heutige Qualitätsforderungen regelmäßige Entnahmen kleiner Laborschnitte, die bei den bekannten Vorrichtungen nur bedingt oder überhaupt nicht ohne Produktionsunterbrechung durchgeführt werden können.

Die Aufgabe der vorliegenden Erfindung besteht darin, eine Vorrichtung zum Sägen plattenförmiger Produkte der eingangs genannten Art dahingehend zu schaffen, dass ein Wechsel der Sägen ohne Produktionsunterbrechung erfolgen kann.

Die Lösung dieser Aufgabe besteht in einer Vorrichtung zum Sägen von plattenförmigen Produkten mit den kennzeichnenden Merkmalen des Patentanspruchs 1 darin, dass in einem Gestell drei Sägeschlitten mit je einer Diagonalsäge eng hintereinander untergebracht und die drei Sägeschlitten mit den drei Diagonalsägen im spitzen Winkel zur Vorschubrichtung der zu sägenden Platte verfahrbar sind.

Vorteilhafte und zweckmäßige Ausgestaltungen des Gegenstandes der Erfindung gehen aus den Unteransprüchen und der folgenden Beschreibung anhand der Zeichnung hervor.

Es zeigen:
- Figur 1: die Vorrichtung in Draufsicht quer über den zu sägenden Platte angeordnet,

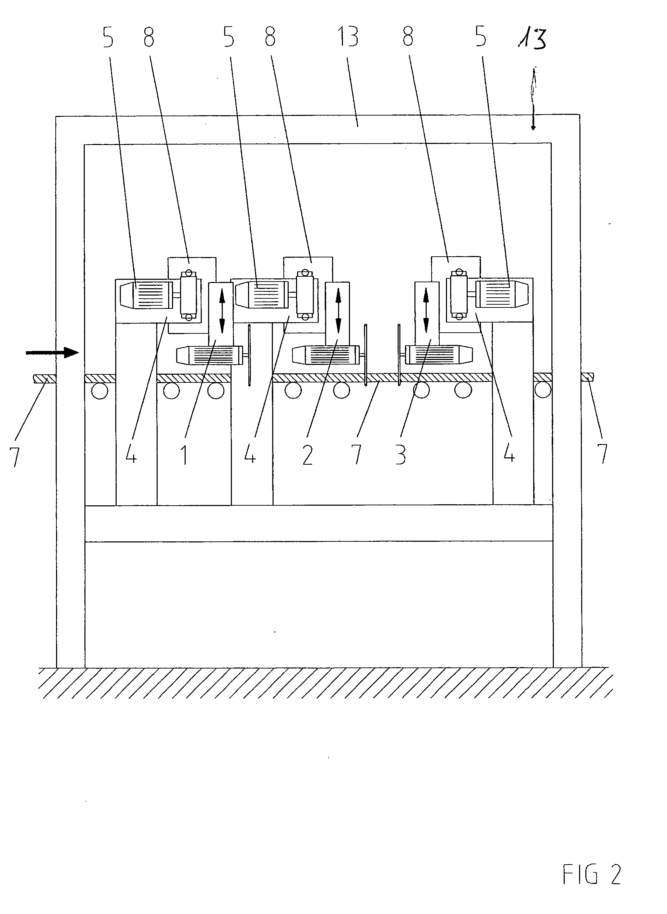

- Figur 2: die Vorrichtung in Seitenansicht mit drei Diagonalsägen über der Platte,
- Figur 3: wie Figur 2 aber mit Vorgelege und
- Figur 4: die Vorrichtung in Seitenansicht mit zwei Diagonalsägen über und den Diagonalsägen unter der Platte angeordnet.

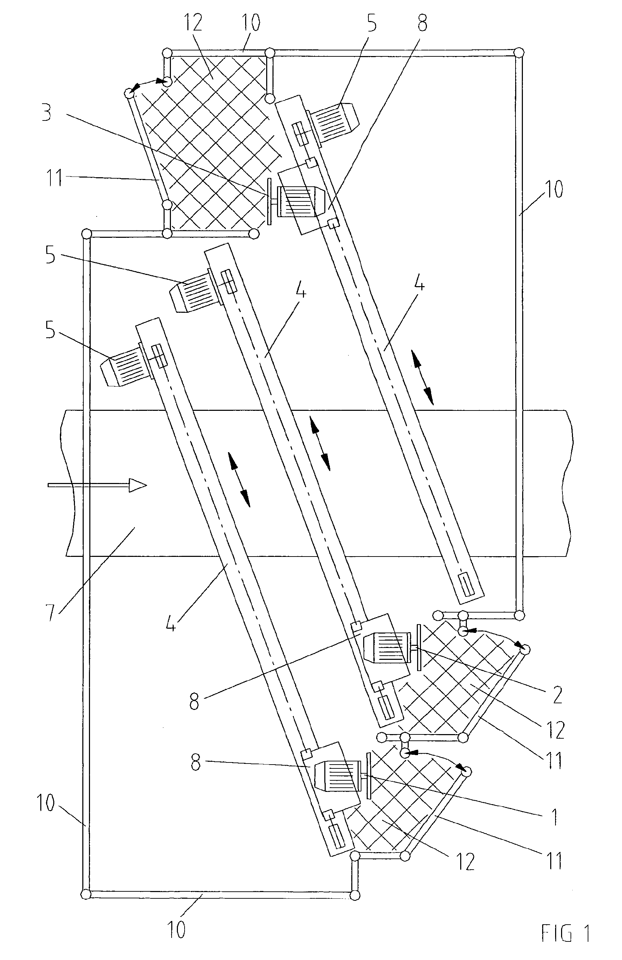

In der Figur 1 findet sich eine Draufsicht auf die Vorrichtung mit drei parallel angeordneten Diagonalsägen 1, 2 und 3 wobei die Transportrichtung der Platte 7 horizontal verläuft. Die Diagonalsägen 1, 2 oder 3 werden durch die Verfahrantriebe 5 mittels Sägeschlitten 8 auf den Laufschienen 4 bewegt. Jede Diagonalsäge 1, 2 oder 3 weist eine Werkzeugposition 12 zum Sägeblattwechsel auf, die durch Sicherheitszäune 10 im Gestell 13 abgesichert und durch Türen 11 zugänglich ist.

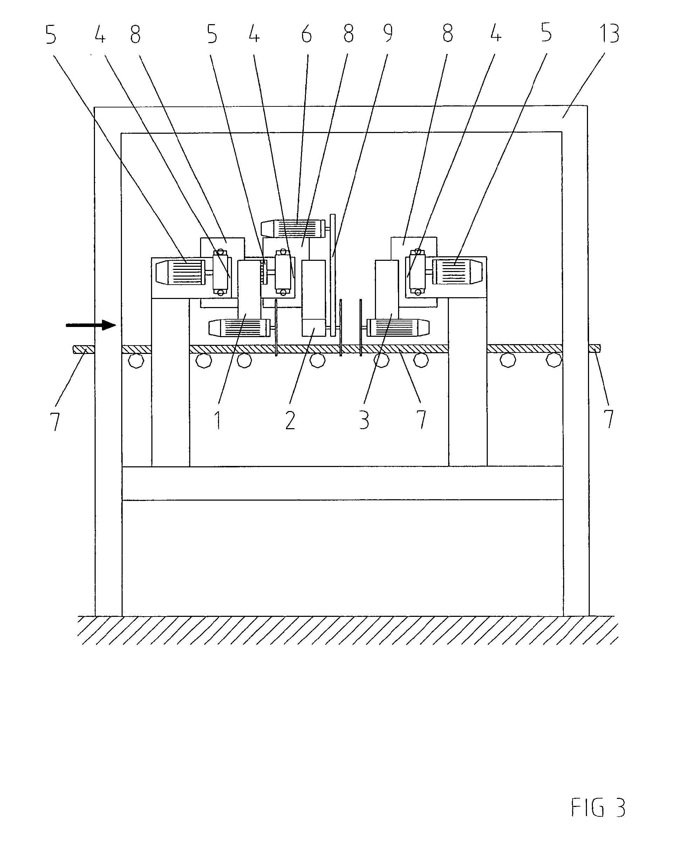

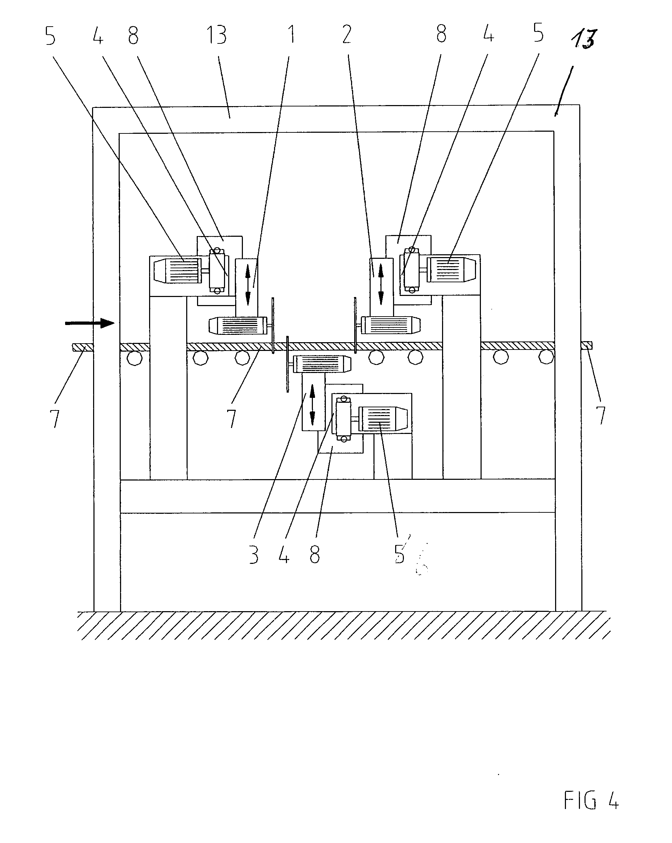

Um den Vorschub der Platte 7 auch bei kurzen Plattenlängen sicherzustellen, muss wie in Figur 3 und Figur 4 dargestellt, die Breite der mittleren oder dritten Diagonalsäge 2 konstruktiv auf ein Minimum reduziert werden.
Dies wird auch dadurch erreicht, dass der Sägeblattantrieb nicht direkt, sondern über ein Vorgelege 9 erfolgt, wobei der Antriebsmotor 6 möglichst Platz sparend vor, über, hinter oder unter dem Sägeblatt angeordnet wird.
Als Vorgelege 9 dienen Antriebselemente bekannter Art, wie Zahnriemen, Gelenkwellen, Winkelgetriebe und dergleichen.

Alle drei Diagonalsägen 1, 2 oder 3 können einzeln oder im Wechseltakt in Kombination mit jeder anderen der drei Diagonalsägen arbeiten. Vorzugsweise arbeiten zwei Sägen im Wechseltakt während zum Werkzeugwechsel die dritte Diagonalsäge die Arbeit der entsprechend still gesetzten Diagonalsäge übernimmt. Außerdem übernimmt die dritte Diagonalsäge den Laborschnitt, sodass die anderen beiden Diagonalsägen ohne Unterbrechung weiterarbeiten können.
Die dritte Diagonalsäge 3 ist dabei über der Platte 7 angeordnet, kann aber auch unterhalb der Platte 7 angeordnet werden.

### Bezugszeichenliste: ZP 1004 EP

1. Diagonalsäge
2. Diagonalsäge
3. Diagonalsäge
4. Laufschiene
5. Verfahrantrieb
6. Antriebsmotor
7. Platte
8. Sägeschlitten
9. Vorgelege
10. Sicherheitszäune
11. Türen
12. Werkzeugposition
13. Gestell

## Patentansprüche

1. Vorrichtung zum Trennen und Aufteilen eines plattenförmigen Produktes, das als eine endliche oder als eine unendliche Platte, Band oder Strang aus einer Produktionsanlage kontinuierlich oder diskontinuierlich austritt und wobei zwei Diagonalsägen in Vorschubrichtung und quer über das Produkt verfahrbar angeordnet sind, **dadurch gekennzeichnet, dass** in einem Gestell (12) drei Sägeschlitten (8) mit je einer Diagonalsäge (1 oder 2 oder 3) eng hintereinander untergebracht und die drei Sägeschlitten (8) mit den drei Diagonalsägen (1, 2, 3) im spitzen Winkel zur Vorschubrichtung der zu sägenden Platte (7) verfahrbar sind.

2. Vorrichtung nach Anspruch 1, **dadurch gekennzeichnet, dass** die mittlere Diagonalsäge (2) als oben liegend angeordnet ist.

3. Vorrichtung nach Anspruch 1, **dadurch gekennzeichnet, dass** die mittlere Diagonalsäge (2) als unten liegend angeordnet ist.

4. Vorrichtung nach den Ansprüchen 1 und 2 oder 1 und 3, **dadurch gekennzeichnet, dass** die mittlere Diagonalsäge (2) über ein Vorgelege (9) antreibbar sind.

5. Vorrichtung nach Anspruch 4, **dadurch gekennzeichnet, dass** der Antriebsmotor (6) für die mittlere Diagonalsäge (2) vor, über, hinter oder unter den Diagonalsägen (2) angeordnet ist.
